# EUROPEAN PATENT SPECIFICATION

(11) **EP 0 598 432 B1**
(45) Date of publication and mention of the grant of the patent: **12.05.1999**
(21) Application number: 93203112.3
(22) Date of filing: 05.11.1993
(51) Int. Cl.: H01B 1/24, C08K 5/07, C08K 7/06, H05K 9/00, H01B 1/20, H01B 1/22

(54) **Polymer compositions comprising a thermoplastic polymer and a conductive fibre**
Polymerzusammensetzungen enthaltend thermoplastische Polymere und leitfähige Faser
Compositions contenant un polymère thermoplastique et une fibre conductrice

(30) Priority: 09.11.1992 US 973867
(43) Date of publication of application: 25.05.1994
(73) Proprietor: SHELL INTERNATIONALE RESEARCH MAATSCHAPPIJ B.V., 2596 HR Den Haag (NL)
(72) Inventor: Byrd, Paul Sharon, Houston, Texas 77070 (US); Danforth, Richard Louis, Missouri City, Texas 77459 (US)

(56) References cited:
- EP-A- 0 322 959
- EP-A- 0 333 300
- US-A- 4 935 304
- US-A- 5 068 289
- DATABASE WPI Section Ch, Derwent Publications Ltd., London, GB; Class A85, AN 89-011178 & JP-A-63 286 437 (ASAHI CHEMICAL) 24 November 1988

## Description

This invention relates to the use of a polymer composition for conducting electrical current wherein the polymer composition comprises a thermoplastic polymer and a conductive fibre.

Thermoplastic polymers are combined with conductive additives to form polymer blends which are capable of conducting electrical current so that they are useful for a variety of applications. Such polymer compositions provide shielding from electromagnetic or radio frequency interference and facilitate electrostatic discharge. Occasionally, conductive polymer blends are used to conduct electronic signals. They may also be used for moulded parts which will be painted electrostatically. Carbon fibre and stainless steel fibres are excellent conductive additives for a variety of applications. The polymer compositions are often selected for specific applications based on their electrical and mechanical properties and their processing characteristics.

It will be appreciated that in view of the above indicated applications it is highly desirable that the polymer compositions exhibit a high conductivity, or a low resistivity, preferably at a low content of the conductive fibre.

It has now surprisingly been found that highly conductive polymer compositions can be obtained by blending a linear alternating polyketone polymer with a conductive fibre. At relatively low conductive fibre contents the compositions so obtained have very superior surface or bulk resistivities compared with comparable compositions which contain another thermoplastic polymer, such as Nylon-6,6, polycarbonate or polyacetal. The polyketone polymer compositions obtained exhibit very good processing characteristics and an excellent balance of mechanical properties.

The present invention therefore relates to the use of a polymer composition for electromagnetic or radio shielding, for electrostatic discharge or for conducting electrical current, wherein the polymer composition comprises a linear alternating polyketone polymer and a conductive fibre. The invention also relates to the use of a linear alternating polyketone polymer and a conductive fibre in a polymer composition for reducing the surface resistivity of the composition to a value of 10¹⁴ ohm/square or less, or the volume resistivity to a value of 10¹² ohm.cm or less.

The invention further relates to an article of manufacture destined for, or comprising a part destined for electromagnetic or radio shielding, for electrostatic discharge or for conducting electrical current, wherein the article or the part thereof which is destined for that use has a surface resistivity of 10¹⁴ ohm/square or less, or a volume resistivity of 10¹² ohm.cm or less, and comprises a linear alternating polyketone polymer and a conductive fibre.

Blends of linear alternating polyketone polymers with carbon fibre are known from EP-A-284169. This reference, however, does not provide any indication of the surprisingly superior resistivities of these blends, nor does it indicate any use of these blends for the purpose of conducting electrical current.

The linear alternating polyketone polymers are copolymers of carbon monoxide and one or more ethylenically unsaturated compounds. Their alternating structure implies that in the polymer chains the units originating in carbon monoxide and the units originating in the ethylenically unsaturated compound(s) occur in an alternating order and that these units occur substantially in a 1:1 molar ratio.

The ethylenically unsaturated compounds may contain exclusively hydrogen and carbon atoms but they may also contain heteroatoms, such as in methyl acrylate, vinyl acetate, ethyl vinyl ether and N-vinylpyrrolidone. The ethylenically unsaturated compounds are preferably hydrocarbons. The ethylenically unsaturated hydrocarbons have suitably up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene.

The preferred polyketone polymers are copolymers of carbon monoxide and ethylene or terpolymers of carbon monoxide, ethylene, and a second ethylenically unsaturated hydrocarbon of at least 3 carbon atoms, particularly an α-olefin such as propylene. When the preferred polyketone terpolymers are employed as the major polymeric component of the blends of the invention, there will be within the terpolymer at least 2 units derived from a monomer of ethylene for each unit derived from a monomer of the second hydrocarbon. Preferably, there will be from 10 units to 100 units derived from a monomer of ethylene for each unit derived from a monomer of the second hydrocarbon.

The polymer chain of the preferred polyketone polymers can be represented by the general formula 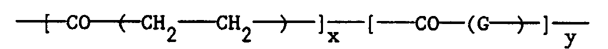 wherein G is derived from the monomer of the ethylenically unsaturated hydrocarbon of at least 3 carbon atoms polymerized through the ethylenic unsaturation and the ratio of x:y is at least 2:1. When copolymers of carbon monoxide and ethylene are employed in the blends of the invention, there will be no second hydrocarbon present and the copolymers are represented by the above formula wherein y is zero. When y is other than zero, i.e., terpolymers are employed, the -CO(̵CH₂-CH₂)̵ units and the -CO(̵G)̵ units are found randomly throughout the polymer chain, and preferred ratios of x:y are from 10:1 to 100:1. The end groups of the polymer chain will depend upon which materials were present during the production of the polymer and whether or how the polymer was purified. The precise nature of the end groups does not appear to influence the properties of the polymer to any considerable extent so that these polymers are fairly represented by the formula for the polymer chain as depicted above.

The physical properties of the polyketone polymers may depend, amongst others, upon the molecular weight (reflected, e.g., by the limiting viscosity number), whether the polymer is a copolymer or a terpolymer and, in the case of terpolymers, the nature of and the proportion of the second hydrocarbon present. Typical melting points for the polyketone polymers are from 175 °C to 300 °C, more typically from 210 °C to 270 °C. The polymers have preferably a limiting viscosity number (LVN), measured in m-cresol at 60 °C in a standard capillary viscosity measuring device, from 0.5 dl/g to 10 dl/g, more preferably from 0.8 dl/g to 4 dl/g.

U.S. 4,880,903 discloses a linear alternating polyketone polymer of carbon monoxide, ethylene, and other olefinically unsaturated hydrocarbons, such as propylene. Processes for production of such polyketone polymers typically involve the use of a catalyst composition formed from a compound of a Group VIII metal selected from palladium, cobalt or nickel, the anion of a strong non-hydrohalogenic acid and a bidentate ligand of phosphorus, arsenic or antimony.

The properties of polyketone polymers are also greatly influenced by the molecular purity of the polymer, as measured by the extent to which the polymer consists of the units originating in carbon monoxide and the units originating in the ethylenically unsaturated compound. A polymer of a lower carbon monoxide content than 50 mol% cannot exhibit the linear alternating nature of the above formula. A polymer made by other methods, such as by free radical polymerization, will not have the regular, linear alternating structure of the polyketone polymers used in this invention.

The conductive fibre of the invention is preferably carbon fibre, a commercially available material produced by known methods. Polyacrylonitrile (PAN), pitch, and rayon are all used as precursors in the production of carbon fibre. PAN is the preferred precursor for the conductive carbon fibres of the invention. Carbon fibres are available in chopped, milled, and continuous fibre forms. Another suitable conductive fibre for use in this invention is stainless steel fibre.

Chopped conductive fibres are preferred in the invention. Chopped fibres typically have a high aspect ratio, with a fibre length of from 5 mm to 10 mm and a fibre diameter of from 5 µm to 10 µm. The conductive fibre may be coated with other conductive materials, such as nickel-coated carbon fibre. The conductive fibres of the invention are preferably obtained from the manufacturer with a surface treatment compatible with the polyketone polymer, such as a polyurethane sizing.

The present polyketone polymer compositions may be categorized, based on their surface resistance, as antistatic, static dissipative, and conductive. The composition is considered antistatic if it exhibits a surface resistivity in the range of 10¹² to 10¹⁴ ohm/square, static dissipative if it exhibits a surface resistivity in the range of from 10⁵ to 10¹² ohm/square, and conductive if it exhibits a surface resistivity of 10⁰ to 10⁵ ohm/square. Analogous ranges for volume resistivity may be defined as follows: 10¹⁰ to 10¹² ohm.cm for anti-static compositions, 10³ to 10¹⁰ ohm.cm for static dissipative compositions and 10⁻² to 10³ ohm.cm for conductive compositions.

The present polymer compositions exhibit conductivity at significantly lower loadings of conductive fibre than those for comparable polymers. They contain typically from 0.5 wt% to 40 wt% of conductive fibre, based on the total composition, depending on the level of resistivity and the mechanical properties of the composition desired. In particular, polyketone blends containing from 5 wt% to 20 wt% conductive fibre, and more preferably from 7 wt% to 15 wt% conductive fibre, based on the total composition, exhibit a surface resistivity of less than 700 ohm/square and a volume resistivity of less than 400 ohm.cm. Most preferably, polyketone blends containing from 10 wt% to 15 wt% conductive fibre, based on the total composition, exhibit a surface resistivity of less than 150 ohm/square and a volume resistivity of less than 50 ohm.cm.

A skilled person will appreciate that to compound conductive polymer blends, it is desirable to add enough conductive fibre to form a continuous conductive network within the polymer. Long, thin fibres with a high aspect ratio are preferred. The method of producing the polymer blends of the invention is not material. Typically a relatively uniform distribution of the conductive fibre throughout the polyketone is obtained whilst the physical integrity of the fibre is substantially maintained (e.g. fibres sustain minimal breakage). A preferred method is to incorporate the conductive fibre into the polyketone polymer after the polymer has been heated to a molten state. This may be accomplished during polymer extrusion by introducing the fibre into a low-shear section of the extruder via a down-stream feeder. Another preferred method for making the present composition with minimal fibre breakage is known from EP-A-284169 and involves the application of a paper making technique. If desired, one or more of the sheets obtained by employing this technique may be stacked with one or more other sheets of thermoplastic polymer.

The present polyketone polymer compositions may also include other additives such as antioxidants and stabilizers, dyes, fillers or reinforcing agents, fire resistant materials, mould release agents and other materials designed to improve the processability of the polymers or the properties of the resulting compound. Such additives are added prior to, together with, or subsequent to the blending of the polyketone polymer and the carbon fibre. The presence of these additives may affect the optimum level of the conductive fibre for a given application.

The present polyketone polymer compositions may be processed by methods such as extrusion and injection moulding into sheets, films, plates and shaped parts. Illustrative applications include their use in articles useful in machines and electronic components, and in both internal and external parts for automotive use.

The present polyketone polymer compositions are in particular suitable for use in an article of manufacture or in a part thereof which article or part is destined for electromagnetic or radio shielding, for electrostatic discharge or for conducting electrical current. Typically, such use for shielding includes their use in housings for computers, electronic instruments and communication equipment. Their use in bearings, bushings, rollers, gears, and in particular in fuel containers, fuel transfer lines or connectors for fuel transfer lines is a good application were electrostatic discharge is important, e.g. for preventing electric shock or sparks. The present polyketone polymer compositions may be used in moulded parts which will be painted electrostatically or in parts of computer keyboards and electrodes suitable for conducting electronic signals.

The invention is further illustrated by the following Examples.

### Example 1

A linear alternating terpolymer of carbon monoxide, ethylene, and propylene was produced in the presence of a catalyst composition formed from palladium acetate, trifluoroacetic acid and 1,3-bis[di(2-methoxyphenyl)phosphino]propane. The polyketone polymer had a melting point of 220 °C and an LVN of 1.1 dl/g when measured in m-cresol at 60 °C. Conventional additives were added to the polyketone polymer.

### Example 2

Polyketone polymer blends were prepared by combining the polymer of Example 1 with a chopped carbon fibre which was produced from polyacrylonitrile and had a sizing compatible with polyketone polymer. The fibres had a length of 6 mm and a diameter of 7 µm. Blends were prepared to contain 7 wt%, 10 wt%, and 15 wt% carbon fibre, based on total blend composition.

All of the blends were prepared by melt compounding the polyketone polymer, with or without carbon fibre, on an intermeshing corotating twin screw extruder, at melt temperature of from 235 °C to 250 °C. Samples of each blend were injection moulded into ASTM test specimens using a 90 ton injection moulding machine. Tests were conducted on the specimens to determine mechanical and electrical properties in accordance with ASTM standards. Results are shown in Table 1.

The results indicate that tensile strength, flexural strength, and flexural modulus all increased and became more rigid with increased carbon fibre content. The addition of carbon fibre reduced the notched Izod impact strength. Addition of small amounts of carbon fibre also significantly reduced linear mould shrinkage. In general, the blends exhibit an excellent balance of mechanical properties.

The electrical conductivity increased with increased carbon fibre content. Surprisingly, the surface resistivities (measured in ohms/square) and volume resistivities (measured in ohm-centimeters) exhibited were extremely low, even with only 7 wt% carbon fibre. Comparable engineering thermoplastic polymers typically exhibit much greater resistivities at comparable filler levels, as shown in Table 2.

The low resistivities demonstrated by the polyketone polymer samples containing carbon fibre are considered unexpected. The results indicate that a polyketone polymer, blended with about 7 wt% to 15 wt% carbon fibre, forms a very conductive polymer compound, with a surface resistivity of 650 ohm/square or less.

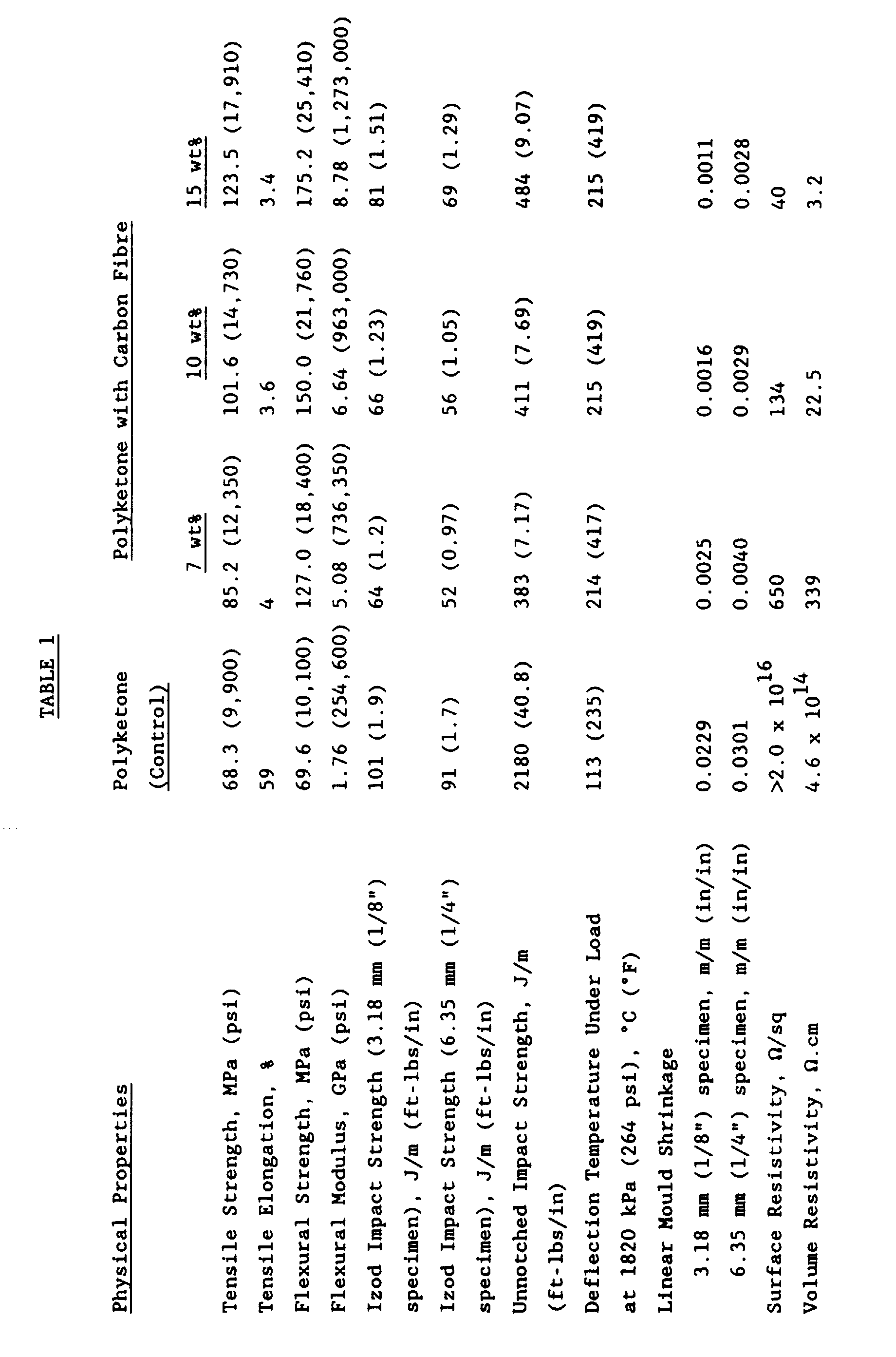

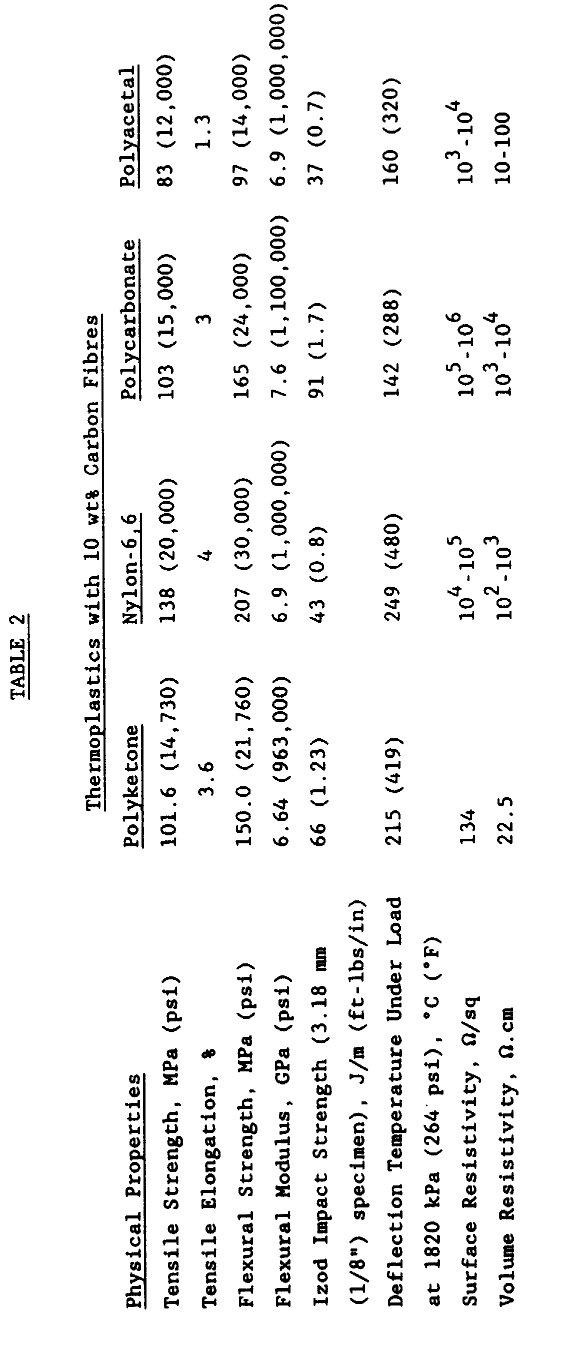

## Claims

1. Polymer composition suitable for electromagnetic or radio shielding for electrostatic discharge or for conducting electrical current, which polymer composition comprises a linear alternating polyketone polymer and a conductive fibre, wherein the conductive fibre has a fibre diameter of at least 5 µm.

2. Composition as claimed in claim 1, wherein the polyketone polymer is represented by the general formula 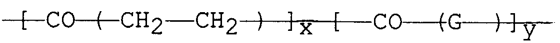 wherein G is derived from a monomer of an ethylenically unsaturated hydrocarbon of at least 3 carbon atoms polymerized through the ethylenic unsaturation and the ratio of x:y is at least 2:1.

3. Composition as claimed in claim 2, wherein the ratio of x:y is from 10:1 to 100:1.

4. Composition as claimed in claim 2 or 3, wherein G is derived from a monomer of propylene.

5. Composition as claimed in claim 2, wherein y is 0.

6. Composition as claimed in any of claims 1-5, wherein the conductive fibre is present in an amount of from 5 wt% to 20 wt%, based on the total composition.

7. Composition as claimed in claim 6, wherein the conductive fibre is present in an amount of from 7 wt% to 15 wt%, based on the total composition.

8. Composition as claimed in any of claims 1-7, wherein the conductive fibre is a chopped fibre with a fibre diameter of from 5 µm to 10 µm.

9. Composition as claimed in any of claims 1-8, wherein the conductive fibre is a carbon fibre.

## Patentansprüche

1. Polymerzusammensetzung, die zur elektromagnetischen oder Radioabschirmung, für eine elektrostatische Entladung oder zum Leiten des elektrischen Stroms geeignet ist, welche Polymerzusammensetzung ein lineares alternierendes Polyketonpolymer und eine leitfähige Faser umfaßt, worin die leitfähige Faser einen Faserdurchmesser von wenigstens 5 µm aufweist.

2. Zusammensetzung nach Anspruch 1, worin das Polyketonpolymer durch die allgemeine Formel 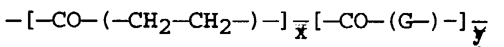 dargestellt ist, worin G von einem Monomer eines ethylenisch ungesättigten Kohlenwasserstoffes mit wenigstens 3 Kohlenstoffatomen, polymerisiert über die ethylenische Unsättigung, abgeleitet ist und das Verhältnis x:y wenigstens 2:1 beträgt.

3. Zusammensetzung nach Anspruch 2, worin das Verhältnis x:y von 10:1 bis 100:1 beträgt.

4. Zusammensetzung nach Anspruch 2 oder 3, worin G von einem Propylenmonomer abgeleitet ist.

5. Zusammensetzung nach Anspruch 2, worin y den Wert 0 hat.

6. Zusammensetzung nach einem der Ansprüche 1 bis 5, worin die leitfähige Faser in einer Menge von 5 bis 20 Gew.-%, bezogen auf die Gesamtzusammensetzung, vorliegt.

7. Zusammensetzung nach Anspruch 6, worin die leitfähige Faser in einer Menge von 7 bis 15 Gew.-%, bezogen auf die Gesamtzusammensetzung, vorliegt.

8. Zusammensetzung nach einem der Ansprüche 1 bis 7, worin die leitfähige Faser eine Stapelfaser mit einem Faserdurchmesser von 5 µm bis 10 µm ist.

9. Zusammensetzung nach einem der Ansprüche 1 bis 8, worin die leitfähige Faser eine Kohlenstofffaser ist.

## Revendications

1. Composition de polymère convenant comme écran électromagnétique ou haute fréquence, pour les décharges électrostatiques ou pour conduire un courant électrique, laquelle composition de polymère comprend un polymère de polycétone alterné linéaire et une fibre conductrice, dans laquelle la fibre conductrice a un diamètre de fibre d'au moins 5 µm.

2. Composition suivant la revendication 1, dans laquelle le polymère de polycétone est représenté par la formule générale : 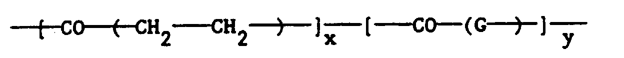 dans laquelle G provient d'un monomère d'un hydrocarbure éthyléniquement insaturé d'au moins 3 atomes de carbone polymérisé par l'insaturation éthylénique et le rapport de x/y est d'au moins 2/1.

3. Composition suivant la revendication 2, dans laquelle le rapport de x/y est de 10/1 à 100/1.

4. Composition suivant l'une et l'autre des revendications 2 et 3, dans laquelle G provient d'un monomère de propylène.

5. Composition suivant la revendication 2, dans laquelle y est égal à 0.

6. Composition suivant l'une quelconque des revendications 1 à 5, dans laquelle la fibre conductrice est présente en une quantité de 5% en poids à 20% en poids, par rapport à la composition totale.

7. Composition suivant la revendication 6, dans laquelle la fibre conductrice est présente en une quantité de 7% en poids à 15% en poids, par rapport à la composition totale.

8. Compostion suivant l'une quelconque des revendications 1 à 7, dans laquelle la fibre conductrice est une fibre coupée avec un diamètre de fibre de 5 µm à 10 µm.

9. Compostion suivant l'une quelconque des revendications 1 à 8, dans laquelle I a fibre conductrice est une fibre de carbone.
